Europäisches Patentamt

European Patent Office

Office européen des brevets

(19)

(11) Veröffentlichungsnummer: **0 302 298 B1**

## EUROPÄISCHE PATENTSCHRIFT

(12)

(45) Veröffentlichungstag der Patentschrift: **24.06.92**

(21) Anmeldenummer: **88111601.6**

(22) Anmeldetag: **19.07.88**

(51) Int. Cl.⁵: **C02F 1/72**, C02F 1/50, C02F 3/28

(54) **Entseuchung von Klärschlamm.**

(30) Priorität: **05.08.87 DE 3726020**
**18.05.88 DE 3816989**

(43) Veröffentlichungstag der Anmeldung:
**08.02.89 Patentblatt 89/06**

(45) Bekanntmachung des Hinweises auf die
Patenterteilung:
**24.06.92 Patentblatt 92/26**

(84) Benannte Vertragsstaaten:
**AT BE CH DE ES FR GB IT LI NL**

(56) Entgegenhaltungen:
**GB-A- 2 010 798**

**CHEMICAL ABSTRACTS, Band 102, Nr. 4, 1985, Seite 428, Nr. 31428z, Columbus, Ohio, US; A.F. GODFREE et al.: "The effectiveness of chemical disinfection of fecal bacteria in sludge", & SEWAGE SLUDGE STAB. DISINFECT., (WATER RES. CENT. CONF.) 1983, (Pub. 1984) 412-25**

**WASTEWATER TREATMENT PLANT DESIGN, WPCF, 1977, Seiten 515-521, Kapitel 27, Washington D.C., US; "Anaerobic sludge digestion"**

**MEMENTO TECHNIOUE DE L'EAU, 1972, Seite 406, Degrémont, Paris, FR**

(73) Patentinhaber: **Peroxid-Chemie GmbH**
**Dr.-Gustav-Adolf-Strasse 3**
**W-8023 Höllriegelskreuth(DE)**

(72) Erfinder: **Gregor, Carl Heinz, Dr. Dipl.-Chem.**
**Kreuzeckstrasse 12**
**W-8022 Grünwald(DE)**

(74) Vertreter: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

## Beschreibung

Die Erfindung betrifft ein Verfahren zur Behandlung von Klärschlamm.

Bei der Behandlung von Abwasser entsteht in mehreren Stufen Schlamm, der wegen seines Gehaltes an Stickstoff, Mineralsalzen und Phosphorsäure einen wertvollen Dünger darstellt. Um diesen in den Kläranlagen entstehenden Schlamm jedoch für die Düngung verwenden zu können, müssen die in der Klärschlammverordnung gesetzlich festgelegten Anforderungen erfüllt sein. Insbesondere darf der zur Düngung verwendete Schlamm nicht mehr durch pathogene Mikroorganismen und Parasiten wie z. B. Wurmeier verseucht sein. Darüberhinaus muß der Schlamm so stabilisiert sein, daß er keine fäulnisfähigen Verbindungen mehr enthält und damit keine Geruchsbelästigung mehr verursacht.

Um nun diese Anforderungen zu erfüllen, ist es bekannt, den Schlamm in einem zweistufigen Verfahren zu behandeln. Dabei wird der in der Kläranlage entstehende Schlamm zuerst bei einem Tag Aufenthaltszeit mit Sauerstoff oder Luft bei Temperaturen von 60°C behandelt. Dadurch wird eine Abtötung der pathogenen Mikroorganismen und Wurmeier bewirkt. Der so entseuchte Schlamm wird dann in eine Faulanlage geführt und dort in üblicher Weise ausgefault.

Nachteil dieses bekannten Verfahrens ist es, daß für seine Durchführung relativ hohe Investitionskosten erforderlich sind. In bereits bestehende Kläranlagen kann nur unter großem Aufwand die Stufe der aeroben Schlammbehandlung integriert werden. Darüberhinaus wird in der aeroben Erhitzungsstufe bereits organische Substanz verbraucht, so daß die Gasausbeute, verglichen mit einem Verfahren, bei dem keine aerobe thermophile Behandlung durchgeführt wird, geringer ist. Weiterhin erfordert die aerobe Erhitzungsstufe einen zusätzlichen Zeitaufwand, der wiederum bei der Auslegung der Kläranlage berücksichtigt werden muß. Da der Schlamm in dem aeroben Erhitzungsbehälter eine Verweilzeit von einem Tag hat, muß dieser Behälter entsprechend dimensioniert sein, um auch bei großem Schlammanfall alles aufnehmen zu können. Auch dies erfordert hohe Investitionen.

Die GB-A 2010798 offenbart ein Verfahren zur Desodorierung von Klärschlämmen, bei dem der Schlamm bei einer Temperatur von 5 bis 40°C mit mindestens einem aktiven Sauerstoffdonor behandelt wird. Der aktive Sauerstoffdonor ist vorzugsweise Wasserstoffperoxid, ein Alkalimetall-Perborat, ein Alkalimetallpersulfat, eine Percarbonsäure, ein Percarbamid oder ein Alkalimetall- oder Erdalkalimetallchlorit. Konkret wird nur die Behandlung des Schlamms mit ca. 100 bis 300 mg/l Natriumchlorit offenbart. Der Zweck dieses Verfahrens liegt darin, eine unerwünschte Gruchsentwicklung von Klärschlämmen zu verhindern. Eine Beseitigung von pathogenen Keimen und Wurmeiern wird nicht offenbart.

Chemical Abstracts 102: 31428Z offenbart die Behandlung von Klärschlämmen mit Peressigsäure bei einer Konzentration von 500 bis 1000 mg/l. Dabei wurden bakterizide und ovizide Eigenschaften festgestellt. Es traten erhebliche Verringerungen der Salmonella-Keimzahlen auf, die von einem ähnlichen Effekt hinsichtlich des Anteils an lebensfähigen Taenia saginata-Eiern begleitet wurden. Auch das letztgenannte Dokument offenbart nicht, auf welche Weise ein von pathogenen Keimen und Wurmeiern freier Schlamm erzeugt werden kann, der ohne weitere Schwierigkeiten einer nachfolgenden Ausfaulung unterzogen werden kann.

Aufgabe der Erfindung war es nun, ein Verfahren zur Verfügung zu stellen, mit dem stabilisierter und entseuchter, d.h. von pathogenen Keimen und Wurmeiern freier Schlamm erzeugt werden kann, das ohne große Investitionen in den bestehenden Kläranlagen durchgeführt werden kann und das keine Verminderung der Gasausbeute bewirkt.

Diese Aufgabe wird gelöst durch ein Verfahren zur Behandlung von Klärschlamm, worin man den bei der Abwasserbehandlung entstehenden Schlamm, insbesondere Primär- und/oder Belebtschlamm, mit einer Persäure mit 1 bis 3 C-Atomen behandelt, welches dadurch gekennzeichnet ist, daß man eine Konzentration von 2000 bis 6000 mg Persäure pro Liter Schlamm verwendet und den so behandelten Schlamm anschließend in einer Faulanlage ausfaulen läßt.

Mit dem erfindungsgemäßen Verfahren gelingt es, einen Schlamm zu erzeugen, der frei ist von pathogenen Mikroorganismen und von Wurmeiern und der keine fäulnisfähige Substanz mehr enthält. Das Verfahren ist einfach und schnell durchzuführen und erfordert keine großen Investitionen auch bei bereits vorhandenen Kläranlagen. Es wird somit ein Verfahren zur Verfügung gestellt, das unter Steigerung der Gasausbeute und mit geringerem Zeitaufwand als bisher möglich, einen stabilen und den hygienischen Anforderungen entsprechenden Schlamm liefert.

Mit dem erfindungsgemäßen Verfahren kann jeder bei der Abwasserbehandlung entstehende Schlamm behandelt werden. Hier kommen insbesondere Primär- und/oder Belebtschlamm in betracht. Dieser Schlamm wird mit einer Persäure mit 1 bis 3 C-Atomen behandelt. Bevorzugt wird Peressigsäure eingesetzt, besonders bevorzugt Gleichgewichts-Peressigsäure.

Die Behandlung mit der Persäure kann im Schlammeindicker, auf dem Transport zur Faulanlage sowie auch bereits vor dem Eindicker bzw. der Faulanlage erfolgen. Der Zeitaufwand für diese Behandlung ist sehr gering und liegt bevorzugt im Bereich von 10 Minuten bis 2 Stunden. Es sind daher keine besonderen Behälter für die Behandlung erforderlich. In einer bevorzugten Ausführungsform wird die Persäure auf dem Weg zur Faulanlage zugegeben. Dazu wird auf dem Transportweg zur Faulanlage eine Mischstrecke vorgesehen, die zusätzlich eine Dosiereinrichtung beinhaltet, mit der die Persäure dosiert zugegeben werden kann. Die Kontaktzeit des Schlamms auf dieser Transportstrecke ist ausreichend für die Behandlung mit Persäure.

Die Menge an Persäure wird so bemessen, daß alle pathogenen Mikroorganismen sowie die Wurmeier abgetötet werden.

Um eine ausreichende Abtötung der pathogenen Mikroorganismen und Wurmeier zu erzielen, wird die Persäure in einer Menge von 2000 bis 6000 mg/l Schlamm eingesetzt. Eine geringere Menge gewährleistet keine sichere Abtötung mehr, während höhere Konzentrationen an Persäure keine weitere Verbesserung mehr bewirken können und deshalb unwirtschaftlich sind. Besonders bevorzugt beträgt die eingesetzte Menge an Persäure 2000 bis 4000 mg/l Schlamm. Vorteilhaft ist es, wenn ein geringer Persäureüberschuß verwendet wird. Der dann in die Faulanlage gelangende restliche Persäureanteil bewirkt die erwünschte Oxidation von im Faulturm entstehendem $H_2S$. Da das in der Faulanlage entstehende Gas als Energieträger verwendet wird und in Heizungen oder Motoren verwendet werden soll, ist es ohne Persäureüberschuß sehr nachteilig, wenn es $H_2S$-Gas enthält, das beispielsweise Katalysatoren vergiftet und noch in sehr geringen Konzentrationen einen unangenehmen Geruch aufweist und bei der Verbrennung korrosiv wirkt.

Bei der Behandlung mit Persäure entstehen keine schädlichen oder toxischen Produkte. Bei der Oxidation mit Persäure entstehen, abhängig von der eingesetzten Säure, Carbonsäuren mit 1 bis 3 Kohlenstoffatomen, die auch bei der Faulung aus dem organischen Material als Zwischenprodukte entstehen und dann von den Methanbakterien zu Methangas abgebaut werden, sowie $CO_2$, $H_2O$ und $O_2$, so daß durch diese Behandlung keine Kontaminierung mit schädlichen Stoffen wie Metallen oder Halogeniden erfolgt, wie es beispielsweise bei der Entseuchung durch Behandlung mit Chlor der Fall ist.

Die Behandlungsstufe mit Persäure kann bei Umgebungstemperatur durchgeführt werden. Eine Erhitzung ist nicht erforderlich, so daß mit dem erfindungsgemäßen Verfahren gegenüber bekannten Verfahren zur Entseuchung, wie der Pasteurisierung oder der aerob thermophilen Schlammbehandlung, Energie eingespart wird.

Bei Bedarf wird nach der Behandlung mit Persäure der pH des Schlamms mit pH-regulierenden Mittel, wie beispielsweise Calciumoxid oder Calciumhydroxid auf einen Wert von 7 bis 9 eingestellt, damit der Schlamm für die Behandlung in der Faulanlage den optimalen pH-Wert aufweist.

Anschließend an die Persäurebehandlung wird der Schlamm in einer Faulanlage ausgefault. Hier werden alle fäulnisfähigen Substanzen zersetzt, wobei Gas, überwiegend Methangas, entsteht. Dieses Gas hat einen hohen Heizwert und kann zur Energieversorgung verwendet werden. Überraschenderweise ist die Gasausbeute bei dem erfindungsgemäßen Verfahren außerdem sogar höher als in bisher bekannten Verfahren, bei denen keine Vorbehandlungsstufe durchgeführt wird.

Durch die erfindungsgemäße Vorbehandlung des Schlammes kann die Verweilzeit in der Faulanlage verkürzt werden. Bei Verfahren, bei denen keine derartige Vorbehandlung des Schlammes erfolgt, liegt die Verweilzeit in der Faulanlage bei 20 bis 25 Tagen. Erfindungsgemäß ist eine Verweilzeit von 8 bis 20 Tagen, besonders bevorzugt 10 bis 15 Tagen ausreichend, um den Schlamm so zu stabilisieren, daß er keine fäulnisfähigen Substanzen mehr enthält.

Der so behandelte Schlamm kann zur Düngung verwendet werden. Er ist so stabil, daß praktisch keine Geruchsbelästigung mehr auftritt. Darüberhinaus wird die Wiederverkeimung mit pathogenen Mikroorganismen erschwert.

Der apparative Aufwand bei dem Verfahren der vorliegenden Erfindung ist gering, da für die Behandlung mit Persäure nur eine Dosier- und Mischeinrichtung notwendig ist, die auch nachträglich in bereits vorhandene Anlagenteile integriert werden kann. So kann beispielsweise eine Mischstrecke für die Mischung von Persäure mit Schlamm oder ein Rührkessel vorgesehen werden. Die üblichen Aufenthaltszeiten im Voreindicker oder in der Faulanlage übertreffen bei weitem die Kontaktzeiten für die Entseuchung des Klärschlamms.

Das erfindungsgemäße Verfahren ist einfach und ohne großen apparativen Aufwand durchzuführen und liefert einen vom hygienischen Standpunkt einwandfreien Schlamm, der für die Düngung verwendet werden kann.

Die folgenden Beispiele erläutern die Erfindung.

**Beispiel 1**

3

Zum Nachweis der Entseuchung von Klärschlamm wurde die Auswirkung von Peressigsäure auf die Gesamtkeimzahl (GKZ), auf Enterobacteriaceen (EBAS), Fäkalstreptokokken (STREPT.) und Salmonella senftenberg (SALM.) in Faul- und Rohschlamm untersucht.

Versuchsdurchführung:

Es wurden jeweils 4,5 Liter Schlamm mit 0,5 Liter einer etwa $10^9$ KBE/ml enthaltenden Salmonella s.-Suspension versetzt und vermischt. Anschließend wurden unter ständigem Rühren verschiedene Mengen einer 15 %igen Peressigsäure (PES) zugegeben und über eine Stunde alle 10 Minuten Proben gezogen. Die 24-Stunden-Probe dient dem Nachweis, ob eventuell nur subletal geschädigte Keime vorhanden sind, die sich innerhalb eines Tages erholen.

Tabelle 1 a

| Faulschlamm mit 3 % PES (15 %ig) ≙ 4500 mg PES /Liter | | | | | | |
|---|---|---|---|---|---|---|
| Keime | Versuch Nr. | Kontrolle (t = 0) | 10 (Min) | 30 (Min) | 60 (Min) | 24 (h) |
| GKZ | 1 | $3,5\times10^8$ | 0 | 0 | 0 | 0 |
| | 2 | $8,5\times10^7$ | 0 | 0 | 0 | 0 |
| EBAS | 1 | $4,6\times10^7$ | 0 | 0 | 0 | 0 |
| | 2 | $9,9\times10^7$ | 0 | 0 | 0 | 0 |
| STREPT. | 1 | $9,1\times10^3$ | 0 | 0 | 0 | 0 |
| | 2 | $3,6\times10^4$ | 0 | 0 | 0 | 0 |
| SALM. | 1 | $2,5\times10^8$ | 0 | 0 | 0 | 0 |
| | 2 | $2,5\times10^8$ | 0 | 0 | 0 | 0 |

Tabelle 1 b

| Rohschlamm mit 2,5 % PES (15 %ig) ≙ 3500 mg PES /Liter | | | | | | |
|---|---|---|---|---|---|---|
| Keime | Versuch Nr. | Kontrolle (t = 0) | 10 (Min) | 30 (Min) | 60 (Min) | 24 (h) |
| GKZ | 1 | $3,4\times10^8$ | $5,3\times10^2$ | $1,5\times10^2$ | $2,0\times10^2$ | $7,7\times10^2$ |
| | 2 | $3,4\times10^8$ | $7,5\times10^2$ | $0,5\times10^2$ | 0 | $0,5\times10^2$ |
| EBAS | 1 | $1,5\times10^8$ | 0 | 0 | 0 | 0 |
| | 2 | $2,8\times10^8$ | 0 | 0 | 0 | 0 |
| STREPT. | 1 | $8,8\times10^5$ | 0 | 0 | 0 | 0 |
| | 2 | $7,4\times10^5$ | 0 | 0 | 0 | 0 |
| SALM. | 1 | $2,5\times10^8$ | 0 | 0 | 0 | 0 |
| | 2 | $2,5\times10^8$ | 0 | 0 | 0 | 0 |

Die obigen Werte zeigen, daß eine vollständige Desinfektion bei Faulschlamm durch Zugabe von 3 % PES (15 %ig), bei Rohschlamm von 2,5 % PES (15 %ig), erzielt werden konnte.

**Beispiel 2**

Gasproduktion in der Faulstufe nach PES-Vorbehandlung

In 2 Versuchen wurden die Auswirkungen der Zugabe von PES auf die Faulstufe, insbesondere auf die Gasproduktion, untersucht. Dazu wurden in 2 parallel betriebenen Faulreaktoren mit 8 l Inhalt, bei einer Aufenthaltszeit von 20 Tagen, mit PES behandelte und unbehandelte Schlämme ausgefault.

Bei Zugabe von nur 1 % PES (15 %ig) vor der Faulung erhöhte sich die Gasmenge um durchschnittlich 13,4 %, bei Zugabe von 2 % PES (15 %ig) um durchschnittlich 28,8 %. Der $CO_2$-Anteil stieg zwar ebenfalls von 28 % (unbehandelt) auf 30 % (mit PES behandelt) an, was jedoch nur eine unbedeutende Verschlechterung der Gasqualität bedeutet, die vom Vorteil der wesentlich erhöhten Gasproduktion weit überkompensiert wird. Diese erhöhte Gasproduktion entspricht einer entsprechend erhöhten Energierückwirkung.

**Patentansprüche**

1. Verfahren zur Behandlung von Klärschlamm, worin man den bei der Abwasserbehandlung entstehenden Schlamm, insbesondere Primär- und/oder Belebtschlamm, mit einer Persäure mit 1 bis 3 C-Atomen behandelt,
   **dadurch gekennzeichnet,** daß man eine Konzentration von 2000 bis 6000 mg Persäure pro Liter Schlamm verwendet und den so behandelten Schlamm anschließend in einer Faulanlage ausfaulen läßt.

2. Verfahren nach Anspruch 1, **dadurch gekennzeichnet,** daß man die Behandlung mit Persäure im Voreindicker, auf dem Weg zwischen Voreindicker und Faulanlage oder unmittelbar vor der Faulanlage durchführt.

3. Verfahren nach Anspruch 1 oder 2,
   **dadurch gekennzeichnet,** daß man als Persäure Peressigsäure einsetzt.

4. Verfahren nach einem der vorhergehenden Ansprüche,
   **dadurch gekennzeichnet,** daß man die Persäure in einer Konzentration von 2000 bis 4000 mg Persäure pro Liter Schlamm einsetzt.

5. Verfahren nach einem der vorhergehenden Ansprüche,
   **dadurch gekennzeichnet,** daß man die Behandlung des Schlamms mit Persäure in einem Zeitraum von 10 Minuten bis 2 Stunden durchführt.

6. Verfahren nach einem der vorhergehenden Ansprüche,
   **dadurch gekennzeichnet,** daß man die Ausfaulung in der Faulanlage in einem Zeitraum von 8 bis 20 Tagen durchführt.

7. Verfahren nach Anspruch 6, **dadurch gekennzeichnet,** daß man die Ausfaulung in der Faulanlage in einem Zeitraum von 10 bis 15 Tagen durchführt.

8. Verfahren nach einem der vorhergehenden Ansprüche,
   **dadurch gekennzeichnet,** daß der pH des Schlamms vor Einleitung in die Faulanlage mit Calciumoxid oder Calciumhydroxid auf einen Wert von 7 bis 9 eingestellt wird.

**Claims**

1. Process for the treatment of sewage sludge, wherein one treats the sludge arising in the treatment of waste water, especially primary and/or activated sludge, with a per acid with 1 to 3 C-atoms,
   characterised in that one uses a concentration of 2000 to 6000 mg of per acid per litre of sludge and subsequently allows the so treated sludge to digest in a septic plant.

2. Process according to claim 1, characterised in that one carries out the treatment with per acid in the pre-concentrator on the path between preconcentrator and septic plant or immediately before the septic plant.

3. Process according to claim 1 or 2, characterised in that one uses peracetic acid as per acid.

4. Process according to one of the preceding claims, characterised in that one uses the per acid in a concentration of 2000 to 4000 mg per litre of sludge.

5. Process according to one of the preceding claims, characterised in that one carries out the treatment of the sludge with per acid in a period of time of 10 minutes to 2 hours.

**6.** Process according to one of the preceding claims, characterised in that one carries out the digestion in the septic plant in a period of time of 8 to 20 days.

**7.** Process according to claim 6, characterised in that one carries out the digestion in the septic plant in a period of time of 10 to 15 days.

**8.** Process according to one of the preceding claims, characterised in that the pH of the sludge is adjusted, before passing into the septic plant, with calcium oxide or calcium hydroxide to a value of 7 to 9.

**Revendications**

**1.** Procédé de traitement d'une boue d'épuration, dans lequel on traite la boue qui se forme lors du traitement d'eaux usées, en particulier une boue primaire et/ou une boue activée, avec un peracide de 1 à 3 atomes de carbone, caractérisé en ce qu'on utilise une concentration de 2000 à 6000 mg de peracide par titre de boue et qu'on fait digérer ensuite dans un digesteur la boue ainsi traitée.

**2.** Procédé selon la revendication 1, caractérisé en ce qu'on réalise le traitement avec le peracide dans le pré-épaississeur, sur le chemin entre le pré-épaississeur et le digesteur ou juste avant le digesteur.

**3.** Procédé selon la revendication 1 ou 2, caractérisé en ce qu'on utilise comme peracide l'acide peracétique.

**4.** Procédé selon l'une des revendications précédentes, caractérisé en ce qu'on introduit le peracide à une concentration de 2000 à 4000 mg de peracide par litre de boue.

**5.** Procédé selon l'une des revendications précédentes, caractérisé en ce qu'on effectue le traitement de la boue avec le peracide en un espace de temps de 10 minutes à 2 heures.

**6.** Procédé selon l'une des revendications précédentes, caractérisé en ce qu'on effectue la digestion dans le digesteur en un espace de temps de 8 à 20 jours.

**7.** Procédé selon la revendication 6, caractérisé en ce qu'on effectue la digestion dans le digesteur en un espace de temps de 10 à 15 jours.

**8.** Procédé selon l'une des revendications précédentes, caractérisé en ce que le pH de la boue est ajusté à une valeur de 7 à 9 à l'aide d'oxyde de calcium ou d'hydroxyde de calcium, avant l'introduction dans le digesteur.